# EUROPÄISCHE PATENTSCHRIFT

(11) **EP 0 877 008 B1**
(45) Veröffentlichungstag und Bekanntmachung des Hinweises auf die Patenterteilung: **15.03.2000**
(21) Anmeldenummer: 98107298.6
(22) Anmeldetag: 22.04.1998
(51) Int. Cl.: C04B 41/52

(54) **Verfahren zum Aufbringen eines Überzugs aus zumindest zwei durch Strahlung vernetz- und härtbaren Schichten auf eine Keramikfliese**
A method of coating ceramic tiles wherein at least two radiation-curable layers are applied
Procédé de revêtement de dalles céramiques comprenant au moins deux couches photodurcissables

(30) Priorität: 07.05.1997 DE 19719342
(43) Veröffentlichungstag der Anmeldung: 11.11.1998
(73) Patentinhaber: MZE Engineering für Verfahrenstechnik GmbH, 26160 Bad Zwischenahn (DE)
(72) Erfinder: Zaher, Maximilian, 26125 Oldenburg (DE)
(74) Vertreter: von Hellfeld, Axel, Dr. Dipl.-Phys.

(56) Entgegenhaltungen:
- DE-C- 4 421 557
- US-A- 4 269 869

## Beschreibung

Die Erfindung betrifft ein Verfahren zum Aufbringen eines Überzugs aus zumindest zwei Schichten, die mittels Strahlung vernetz- und härtbar sind, auf eine Keramikfliese oder dergleichen.

Ein solches Verfahren ist aus der DE 44 21 557 bekannt. Dort ist vorgesehen, die als Grundierung bezeichnete untere Schicht zunächst einer Teilvernetzung zu unterziehen und danach die zweite Lackschicht aufzubringen und dann beide Schichten einer Vollvernetzung mittels Strahlung (Elektronenstrahlung oder UV-Strahlung) zu unterziehen. Bei diesem Stand der Technik hatte die zunächst vorgesehene Teilvernetzung der unteren Lackschicht den Zweck, eine bessere Haftung der Lackschichten aneinander zu erreichen und auch bei Aufbringung eines Dekors mit sublimierbaren Dispersionsfarbstoffen die Sublimation der Farbstoffe auf und in die untere Schicht zu fördern.

Es hat sich gezeigt, daß dieser Stand der Technik insofern bei Aufbringung von Dekoren verbesserungsfähig ist, als es bei einer Teilvernetzung der unteren Lackschicht zu einem "Verschwimmen" der Sublimationsfarbe kommen kann, d.h. die Konturschärfe des aufgebrachten Dekors leidet und insbesondere bei Anwendung einer sogenannten Release-Technik zum Aufbringen des Dekors entstehen Probleme hinsichtlich eines Anklebens des Papiers. Bei der Release-Technik wird ein Dekor auf einen Träger aufgebracht, z.B. ein Papier, und anschließend wird dann das Dekor vom Träger (Papier) auf die zu dekorierende Fläche übertragen ("released"). Dies ist eine dem Fachmann als solches bekannte Technik.

Die deutsche Patentschrift DE 32 31 845 C2 beschreibt die Herstellung einer Gipsfliese, die mit einer strahlungshärtbaren Harzzusammensetzung beschichtet wird, die zusätzlich Farbpigmente enthalten kann und mit einem zusätzlichen Kunststoffilm überschichtet sein kann. In dem Dokument DE 27 32 062 B2 wird die Beschichtung von Glas oder Keramik mit zwei Kunstharzschichten offenbart, wobei zunächst eine Unterschicht aufgetragen und mittels Wärme (Infrarotstrahlung) vernetzt wird und anschließend die Deckschicht aufgetragen und ebenfalls mittels Wärme (IR) vernetzt wird. Die US-Patentschrift US-A-4,443,392 betrifft geformte Gegenstände aus Kunststein, die mit einer Oberflächenbeschichtung aus härtbaren Harzschichten versehen sind, wobei zunächst eine wärmehärtbare Dekorschicht und anschließend eine oder mehrere ebenfalls wärme- bzw. strahlungshärtbare synthetische Glasurschichten aufgetragen werden. Dem in den drei aufgeführten Dokumenten beschriebenen Stand der Technik ist gemeinsam, daß die Grund- oder Dekorschichten vollständig vernetzt werden, bevor die Deckschicht aufgetragen wird. Bei diesem Stand der Technik sind keine besonderen Maßnahmen vorgesehen, nach der vollständigen Vernetzung die Haftung der Lackschichten aneinander und auch die Oberflächenhärte der obersten Lackschicht zu verbessern.

Der Erfindung liegt die Aufgabe zugrunde, ein Verfahren der eingangs genannten Art dahingehend zu verbessern, daß die Haftung der Lackschichten und die Oberflächenhärte verbessert sind und insbesondere bei Aufbringung eines Dekors die Konturenschärfe des Dekors verbessert ist.

Das erfindungsgemäße Verfahren zum Aufbringen eines Überzugs aus zumindest zwei härtbaren Schichten ohne Dekor sieht folgende Schritte vor:
a) eine untere Schicht wird auf die Fliese aufgetragen und vollvernetzt,
b) eine mittels Elektronenstrahl oder UV-Strahlung vernetz- und härtbare weitere Schicht wird auf die untere Schicht aufgetragen und vollvernetzt, und
c) die vernetzte weitere Schicht wird mit IR-Strahlung so durchstrahlt, daß die untere Schicht anschmilzt.

Besonders vorteilhaft läßt sich die Erfindung bei einer Dekorierung der Keramikfliese anwenden. In diesem Fall sieht die Erfindung folgende Schritte vor:
a) eine untere Schicht wird auf die Fliese aufgetragen und vollvernetzt,
a1) auf die untere, vollvernetzte Schicht wird ein Dekor aufgebracht,
b) eine mittels Elektronenstrahl oder UV-Strahlung vernetz- und härtbare weitere Schicht wird auf die untere Schicht aufgetragen und vollvernetzt, und
c) die vernetzte weitere Schicht wird mit IR-Strahlung so durchstrahlt, daß die untere Schicht anschmilzt.

Im Rahmen der vorliegenden Erfindung können jegliche unglasierten keramischen Fliesen verwendet werden.

Für die Grundierung der unglasierten Fliese, die vornehmlich der Haftungsvermittlung zwischen Substrat und Lackschicht dient, wie für die Lackschicht können allgemein bekannte, durch Strahlen, insbesondere Elektronen- und UV-Strahlen, vernetzbare Zusammensetzungen verwendet werden.

Für Grundierung wie Lackschicht erfindungsgemäß geeignete strahlungsvernetzbare Zusammensetzungen umfassen strahlungsvernetzbare acrylische Präpolymere, wie beispielsweise Polyurethan-, Polyester-, Polyether-, Epoxi- oder Vollacrylate oder Mischungen davon. Diese können zusätzlich mit ebenfalls bekannten, niedrigviskosen Reaktivverdünnern vermischt verwendet werden.

Ferner können nach einem kationischen Härtungsmechanismus vernetzbare Lacksysteme verwendet werden, wie beispielsweise Epoxide oder Vinylether, Mischungen derselben oder Mischungen von Epoxiden und/oder Vinylethern mit vorstehend genannten Acrylaten.

In einer Ausführungsform des erfindungsgemäßen Verfahrens können die vorstehend genannte, durch Strahlen vernetzbare Grundierung bzw. Lackschicht mit einem oder mehreren, als solchen bekannten Photoinitiatoren versetzt verwendet werden, welche eine Vernetzbarkeit mittels UV-Strahlen vermitteln. Zur Anwendung kommen hierbei sämtliche bekannte Photoinitiatoren und Photoinitiatorgemische, gegebenenfalls mit gleichfalls bekannten Coinitiatoren und Sensibilisatoren gemischt.

In einer weiteren Ausführungsform des erfindungsgemäßen Verfahrens können die vorstehend genannten, durch Strahlen vernetzbaren Zusammensetzungen mit Anteilen bekannter, thermisch vernetzbarer Harze bzw. Lacksysteme, die eine über die strahleninduzierte Härtung hinausgehende Verfestigung der Beschichtung unter Wärmeeinfluß ermöglichen, gemischt verwendet werden.

Die strahlungsvernetzbaren Zusammensetzungen können desweiteren anorganische, organische oder metallische Füllstoffe, Mattierungsmittel, rheologische Additive oder Wachse umfassen. Um bestimmte Eigenschaftsprofile zu erreichen, können den Zusammensetzungen ferner Additive, wie Verlaufsmittel, Gleitmittel, Entlüfter, Entschäumer, Haftverbesserer, Dispergierhilfsmittel, Benetzungsmittel, Antiabsetzmittel, Antistatika, Stabilisatoren, Lichtschutzmittel, Korrosionsschutzmittel und weitere, dem Fachmann bekannte Stoffe, einzeln oder in Mischung zugesetzt werden.

Darüberhinaus kann den strahlungsvernetzbaren Zusammensetzungen eine oder mehrere thermisch wirkende Vernetzerkomponenten zugesetzt werden. Umfaßt die strahlungsvernetzbare Zusammensetzung Präpolymere, die reaktive Gruppen enthalten, die mit der thermischen Vernetzerkomponente unter Temperatureinfluß reagieren, kann so eine über die strahlungsinduzierte Vernetzung hinausgehende, weitere Vernetzung des Systems erfolgen.

Für die Auswahl der Komponenten für die Grundierung ist ferner die Verwendung von Materialien vorteilhaft, die bei der strahleninduzierten Vernetzung nur wenig schrumpfen und/oder die polare Gruppen, wie zum Beispiel Hydroxyl-, Carbonsäure-, Phosphorsäureester-, Sulfonsäureester-, Epoxid- oder Aminogruppen enthalten.

Die strahlungsvernetzbare Grundierung bzw. Lackschicht kann auch durch zwei oder mehr übereinander aufgebrachte Einzelschichten erstellt werden.

Um die für Wand- und insbesondere Bodenfliesen erforderliche Härte und Widerstandsfähigkeit sicherzustellen, muß die Grundierung und Lackschicht umfassende Glasur eine ausreichende Dicke aufweisen. Die Lackschicht wird hierzu vorzugsweise in einer Dicke von 120 bis 200 g/m², beispielsweise im Lack-Gießverfahren, auf die grundierte Fliese aufgebracht. Die Grundierung wird vorzugsweise in einer Dicke von 80 bis 120 g/m² auf die unglasierte Fliese aufgetragen. In bevorzugten Ausführungsformen des erfindungsgemäßen Verfahrens wird die Grundierung der Fliese durch Spritz-, Walz-, Gießauftrag oder im Tauchverfahren aufgebracht.

Der in den Patentansprüchen 1 und 2 der vorliegenden Anmeldung gekennzeichnete Erfindungsgegenstand beruht auf der Erkenntnis, daß es möglich ist, die vollvernetzte obere Schicht mit IR-Strahlung so zu durchdringen, daß die darunterliegende, bereits vollvernetzte Schicht leicht anschmilzt, so daß es zu einer verbesserten Haftung zwischen den Schichten kommt. Ist das Dekor bereits auf die untere Schicht aufgetragen, also sandwichartig zwischen den beiden Schichten angeordnet, stört die eingestrahlte IR-Strahlung das Dekor nicht. Die erfindungsgemäß vorgesehene abschließende IR-Bestrahlung der zumindest zwei aufgetragenen Lackschichten hat außerdem den Vorteil, daß die Oberflächenhärte der obersten Lackschicht verbessert wird. Die erfindungsgemäß vorgesehene IR-Bestrahlung auf die obere Schicht wird so eingestellt, daß der gewünschte Anschmelz-Effekt an der Oberfläche der unteren Schicht erreicht wird. Die hierfür einzustellenden Parameter hinsichtlich der IR-Bestrahlung hängen von den verwendeten Lacken und Schichtdicken ab. Im Einzelfall muß die Steuerung der IR-Strahlung hinsichtlich Intensität und Zeit (Einstrahlungsdauer und bei gegebenenfalls gepulster Einstrahlung das sogenannte Tastverhältnis, d.h. das Verhältnis von Pulslänge zu Periodendauer) experimentell optimal ermittelt werden.

Besonders gute Ergebnisse werden dann erhalten, wenn die unterste Schicht aus einem Pulverlack geformt wird. Pulverlacke und ihre Aufbringung auf Substratflächen (hier zum Beispiel Keramikfliesen) sind als solche bekannt. Für eine Pulverbeschichtung eignen sich besonders sogenannte duroplastische Pulverlacke aus Epoxid-, Polyester- und Acrylharzen. Geeignet sind auch Thermoplaste aus PA, EVA-Kopolymeren, PE, PVC, Polyestern und Polyepoxiden, die üblicherweise in einem Wirbelsinterbad aufgebracht werden.

Weiter bevorzugte Ausgestaltungen der Erfindung sind in den abhängigen Ansprüchen beschrieben.

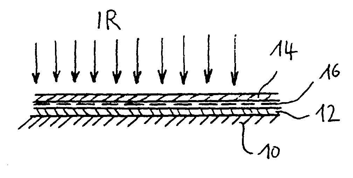

Die Figur zeigt schematisch in stark vergrößertem Maßstab eine Keramikfliese 10, auf der eine erste, untere Lackschicht 12, ein Farbdekor 16 und eine zweite, obere Lackschicht 14 aufgetragen sind. IR-Strahlung ist mit Pfeilen angedeutet.

Zur Herstellung gefärbter Fliesen (ein Dekor wird weiter unten behandelt) wird ein Pulverlack mit einem Färbemittel versehen, um die Oberfläche der Fliese zu grundieren. Es ist auch möglich, zur Herstellung gefärbter Fliesen die obere Lackschicht 14 mit einem Färbemittel zu mischen.

Als farbgebende Substanzen können die Färbemittel lösliche Farbstoffe oder organische oder anorganische Pigmente enthalten.

Bevorzugt werden diffundierbare Farbstoffe verwendet, sogenannte sublimierbare Dispersionsfarben (vgl. EP-A-0 455 849).

Soll die Keramikfliese mit einem Dekor versehen werden, also zum Beispiel einem Motiv (im Unterschied zu einer gleichmäßigen Einfärbung), so kann hierzu in an sich bekannter Weise unter Verwendung von Drucktinten mittels Offset-, Rotations-, Tief-, Flexo- oder Siebdruckverfahren ein Bild, ein Muster oder auch eine Farbe direkt auf die grundierte Fliese aufgetragen werden, d.h. die Fliese, auf der die untere Schicht 12 aufgebracht und vollvernetzt ist. Es kann alternativ auch die sogenannte "Release"-Technik angewandt werden, bei der in der Art eines "Abziehbildes" ein Dekor von einem Träger, beispielsweise aus Papier, auf die Grundschicht 12 übertragen wird (vgl. EP-A-0 455 849). Als Träger können Papierbögen mit Papiergewichten von 30 bis 120 g/cm² und ausreichender Luftdurchlässigkeit dienen, damit während des Sublimations-Umdruckes Luft durch den Farbträger treten kann.

Die Vollvernetzung der unteren Schicht 12 und auch der oberen Schicht 14 erfolgt bevorzugt mittels Elektronenstrahlen. Nach der Vollvernetzung und Härtung wird IR-Strahlung großflächig über die gesamte Fliese eingestrahlt, und zwar zeitlich und intensitätsmäßig so gesteuert, daß die untere Lackschicht 12 zumindest an ihrer Oberfläche leicht anschmilzt. Es hat sich gezeigt, daß die IR-Strahlung so gesteuert werden kann, daß ein großflächiges homogenes Anschmelzen tatsächlich nur an der Oberfläche möglich ist, bevorzugt an der oberen, dem Dekor bzw. der oberen Lackschicht zugekehrten Oberfläche. Es ist auch ein Anschmelzen an der unteren, der Fliese 10 zugekehrten Oberfläche der Lackschicht 12 erreichbar, wodurch auch die Haftung an der Fliese verbessert wird.

## Patentansprüche

1. Verfahren zum Aufbringen eines Überzugs aus zumindest zwei durch Strahlung vernetzbaren und härtbaren Schichten (12, 14) auf eine Keramikfliese (10), umfassend folgende Schritte:
a) eine untere Schicht (12) wird auf die Fliese (10) aufgetragen und vollvernetzt,
b) eine mittels Elektronenstrahl (ESH) oder UV-Strahlung vernetz- und härtbare weitere Schicht (14) wird auf die untere Schicht (12) aufgetragen und vollvernetzt, und
c) die vernetzte weitere Schicht (14) wird mit IR-Strahlung so durchstrahlt, daß die untere Schicht (12) anschmilzt.

2. Verfahren zum Aufbringen eines Überzugs aus zumindest zwei durch Strahlung vernetzbaren und härtbaren Schichten (12, 14) und eines Dekors auf eine Keramikfliese (10), umfassend folgende Schritte:
a) eine untere Schicht (12) wird auf die Fliese (10) aufgetragen und vollvernetzt,
a1) auf die untere, vollvernetzte Schicht (12) wird ein Dekor (16) aufgebracht,
b) eine mittels Elektronenstrahl (ESH) oder UV-Strahlung vernetz- und härtbare weitere Schicht (14) wird auf die untere Schicht (12) aufgetragen und vollvernetzt, und
c) die vernetzte weitere Schicht (14) wird mit IR-Strahlung so durchstrahlt, daß die untere Schicht (12) anschmilzt.

3. Verfahren nach Anspruch 2,
dadurch gekennzeichnet, daß
zwischen den Schritten a1) und b) die untere Schicht (12) mit dem Dekor (16) erwärmt wird.

4. Verfahren nach einem der vorhergehenden Ansprüche,
dadurch gekennzeichnet, daß
die untere Schicht (12) von einem Pulverlack gebildet wird.

5. Verfahren nach einem der Ansprüche 2 bis 4,
dadurch gekennzeichnet, daß
im Verfahrensschritt a1) das Dekor als farbgebende Substanz einen oder mehrere sublimierbare Dispersionsfarbstoffe enthält.

6. Verfahren nach einem der Ansprüche 2 bis 5,
dadurch gekennzeichnet, daß
im Verfahrensschritt a1) das Dekor unter Verwendung eines Trägers mittels eines Transferdruckverfahrens auf die mit der ausgehärteten unteren Schicht versehene Fliese aufgebracht wird, insbesondere mittels einer Release-Technik.

7. Verfahren nach einem der vorhergehenden Ansprüche, wobei zusätzlich vorgesehen ist, daß vor dem Vollvernetzen der oberen Schicht (Schritt b) eine Struktur, insbesondere eine Textur oder Maserung, in die Oberfläche der teilvernetzten Lackschicht (14) eingeprägt wird.

8. Verfahren nach Anspruch 7, wobei die zunächst teilvernetzte Lackschicht (14) vor dem Einprägen der Struktur, Textur oder Maserung erwärmt wird.

9. Verfahren nach einem der vorhergehenden Ansprüche, wobei die untere Schicht (12) mit einer Dicke entsprechend 80 bis 120 g/cm² und die obere Schicht (14) mit einer Dicke entsprechend 120 bis 200 g/cm² aufgetragen werden.

## Revendications

1. Procédé pour déposer sur un carrelage en céramique (10) un revêtement composé d'au moins deux couches (12, 14) pouvant être durcies et réticulées par irradiation, comprenant les opérations suivantes :
a) une couche inférieure (12) est appliquée sur le carrelage (10) et complètement réticulée,
b) une couche supplémentaire (14) pouvant être réticulée et durcie par bombardement électronique (ESH) ou par irradiation aux UV est appliquée sur la couche inférieure (12) et complètement réticulée, et
c) la couche supplémentaire (14) réticulée est irradiée et traversée par un rayonnement IR de telle façon que la couche inférieure (12) fonde.

2. Procédé pour déposer sur un carrelage en céramique (10) un revêtement composé d'au moins deux couches (12, 14) pouvant être durcies et réticulées par irradiation et une décoration, comprenant les opérations suivantes :
a) une couche inférieure (12) est appliquée sur le carrelage (10) et complètement réticulée,
a1) sur la couche inférieure (12) complètement réticulée est déposée une décoration (16),
b) une couche supplémentaire (14) pouvant être réticulée et durcie par bombardement électronique (ESH) ou par irradiation aux UV est appliquée sur la couche inférieure (12) et complètement réticulée, et
c) la couche supplémentaire (14) réticulée est irradiée et traversée par un rayonnement IR de telle façon que la couche inférieure (12) fonde.

3. Procédé selon la revendication 2,
caractérisé en ce que
entre les opérations a1) et b), la couche inférieure (12) est chauffée avec la décoration (16).

4. Procédé selon l'une quelconque des revendications précédentes,
caractérisé en ce que
la couche inférieure (12) est formée par une laque en poudre.

5. Procédé selon l'une quelconque des revendications 2 à 4,
caractérisé en ce que
dans l'opération de procédé a1), la décoration contient comme substance colorante un ou plusieurs colorants à dispersion pouvant être sublimés.

6. Procédé selon l'une quelconque des revendications 2 à 5,
caractérisé en ce que
dans l'opération de procédé a1), la décoration est appliquée en utilisant un support au moyen d'un procédé de transfert par pression sur le carrelage pourvu de la couche inférieure durcie, en particulier au moyen d'une technique anti-adhésive.

7. Procédé selon l'une quelconque des revendications précédentes, dans lequel il est de plus prévu qu'avant la réticulation complète de la couche supérieure (opération b), une structure, en particulier une texture ou une veinure est empreinte dans la surface extérieure de la couche de laque (14) partiellement réticulée.

8. Procédé selon la revendication 7, dans lequel la couche de laque (14) d'abord partiellement réticulée est chauffée avant l'empreinte de la structure, texture ou veinure.

9. Procédé selon l'une quelconque des revendications précédentes, dans lequel la couche inférieure (12) est appliquée avec une épaisseur correspondant à 80 à 120 g/cm² et la couche supérieure (14) avec une épaisseur correspondant à 120 à 200 g/cm².

## Claims

1. A method for the application of a coating of at least two layers (12, 14) on a ceramic tile (10), which can be cross-linked and cured by radiation, comprising the following steps:
a) a bottom layer (12) is applied to the tile (10) and fully cross-linked;
b) a further layer (14) which can be cross-linked and cured by means of electron beam (ESH) or UV radiation is applied to the bottom layer (12) and fully cross-linked; and
c) the cross-linked further layer (14) is irradiated by IR radiation in such a manner that the bottom layer (12) starts to melt.

2. The method for the application of a coating of at least two layers (12, 14) which can be cross-linked and cured by radiation, and a decoration on a ceramic tile (10), comprising the following steps:
a) a bottom layer (12) is applied to the tile (10) and fully cross-linked;
a1) a decoration (16) is applied to the fully cross-linked bottom layer (12);
b) a further layer (14) which can be cross-linked and cured by means of electron beam (ESH) of UV radiation is applied to the bottom layer (12) and fully cross-linked; and
c) the cross-linked further layer (14) is irradiated by IR radiation in such a manner that the bottom layer (12) starts to melt.

3. The method according to Claim 2,
characterised in that
the bottom layer (12) with the decoration (16) is heated between steps a1) and b).

4. The method according to one of the previous claims,
characterised in that
the bottom layer (12) is formed by a powder varnish.

5. The method according to one of Claims 2 through 4,
characterised in that
in the process step 1a) the decoration as the colouring substance contains one or several sublimable dispersed dyestuffs.

6. The method according to one of Claims 2 through 5,
characterised in that
in the process step 1a) the decoration is applied to the tile with the cured bottom layer under the use of a carrier by means of a transfer printing process, in particular, by means of a release technique.

7. The method according to one of the previous claims, wherein it is additionally provided to imprint a structure, in particular a texture or a graining into the surface of the partially cross-linked varnish layer (14) prior to the full cross-inking of the upper layer (step b).

8. The method according to Claim 7, wherein the initially partially cross-linked varnish layer (14) is heated prior to the imprinting of the structure, texture, or graining.

9. The method according to one of the previous claims, wherein the bottom layer (12) is applied with a thickness corresponding to 80 to 120 g/cm², and the upper layer (14) is applied with a thickness corresponding to 120 to 200 g/cm².
